# EUROPEAN PATENT APPLICATION

(11) **EP 4 838 413 A1**
(43) Date of publication of application: **11.11.2026**
(21) Application number: 26176301.5
(22) Date of filing: 04.05.2026
(51) Int. Cl.: G06N 3/045, G06N 3/048, G06N 3/084

(54) **METHODS AND SYSTEMS TO ENHANCE PLASTICITY AND STABILITY IN NEURAL NETWORKS IN CONTINUAL LEARNING**

(30) Priority: 08.05.2025 IN 202521044581
(71) Applicant: Tata Consultancy Services Limited, Maharashtra (IN)
(72) Inventor: MAJUMDER, Anima, 560066 Bangalore, Karnataka (IN); JAIN, Darshita, 560066 Bangalore, Karnataka (IN); HEBBALAGUPPE, Ramya Sugnana Murthy, 110001 New Delhi, Delhi (IN); SINHA, Rajesh, 201305 Noida, Uttar Pradesh (IN)
(74) Representative: Goddar, Heinz J.

(57) **Abstract**

The disclosure relates generally to methods and systems to enhance plasticity and stability in neural networks in continual learning. While conventional techniques primarily focus on enhancing stability, improving plasticity is also essential for better task adaptation. The methods and systems of the present disclosure introduce a Hybrid non-linearity (HyNoL) approach which augments network plasticity by integrating both fixed and adaptive non-linear strategies. The hybrid framework of the present disclosure enables the neural network to dynamically adjust its activations to meet the specific demands of varying tasks, facilitating efficient learning of new information. More specifically, the HyNoL redefines the computation of activations by introducing task dependent adaptable parameters. The fixed non-linear components provide a robust foundation, capturing generalizable patterns across tasks and ensuring consistency in performance, even when faced with new data. Besides, the adaptive components offer flexibility, recalibrating to optimize task-specific learning.

## Description

### CROSS-REFERENCE TO RELATED APPLICATIONS AND PRIORITY

The present application claims priority to Indian application no. 202521044581 filed on May 8, 2025.

### TECHNICAL FIELD

The disclosure herein generally relates to continual learning, and, more particularly, to methods and systems to enhance plasticity and stability in neural networks in continual learning.

### BACKGROUND

In continual learning, deep learning neural network (DNNs) models are trained incrementally using a new set of data without having access to collection of past data. When such models are trained on the new set of data, there is a chance that the models may forget the previously learned data. The ability of the models to quickly adapt to new knowledge is referred to as plasticity and retaining previously learned information is known as stability. There is a need for simultaneously achieving plasticity and stability in continual learning.

While conventional techniques primarily focus on enhancing stability, improving plasticity is also essential for better task adaptation. When training the deep learning neural network models on new tasks, the models update their parameters using a generalized optimization process. Activation functions are used to classify features to different classes. Conventional activation functions are fixed and are nonlinear functions which include a weighted sum of inputs and a bias. If the weights converge to zero, the neurons with zero weights become inactive and updates to these parameters may become ineffective.

### SUMMARY

Embodiments of the present disclosure present technological improvements as solutions to one or more of the above-mentioned technical problems recognized by the inventors in conventional systems.

In an aspect, a processor-implemented method to enhance plasticity and stability in neural networks in continual learning is provided. The method comprising: receiving (i) a neural network architecture of a neural network model (N) for which a plasticity is to be enhanced while maintaining a stability, (ii) a training data (*Dₜᵣₐᵢₙ*)*,* and (iii) a validation data (*Dᵥₐₗ*)*,* wherein the neural network architecture *(N)* comprises *L* number of network layers, one or more initial weights *(W),* and one or more initial biases (*b*), and wherein the training data (*Dₜᵣₐᵢₙ*) and the validation data (*Dᵥₐₗ*) are associated with each task of a plurality of tasks; dividing the neural network architecture into a first block and a second block, based on the *L* number of network layers, wherein the first block comprises the neural network architecture with a predefined number of initial network layers out of the *L* number of network layers, and the second block comprises the neural network architecture with remaining network layers out of the *L* number of network layers; forming a first network configuration model and a second network configuration model using the first block and the second block, using a hybrid activation function, wherein the hybrid activation function comprises of a fixed activation function, and an adaptive activation function, and wherein the first network configuration model comprises the first block with the fixed activation function and the second block with the adaptive activation function, and the second network configuration model comprises the first block with the adaptive activation function and the second block with the fixed activation function; training the first network configuration model and the second network configuration model with the training data (*Dₜᵣₐᵢₙ*)*,* to obtain a first trained network configuration model and a second trained network configuration model, respectively; selecting an optimal network configuration model out of the first network configuration model and the second network configuration model, based on a validation accuracy of the first trained network configuration model and the second trained network configuration model, wherein the validation accuracy is calculated using the validation data (*Dᵥₐₗ*); and recommending the optimal network configuration model for training the neural network model (*N*) with the training data (*Dₜᵣₐᵢₙ*)*,* and the validation data (*Dᵥₐₗ*)*,* to obtain a trained neural network model, wherein the trained neural network model achieves an enhanced plasticity while maintaining the stability.

In another aspect, a system to enhance plasticity and stability in neural networks in continual learning is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) a neural network architecture of a neural network model (*N*) for which a plasticity is to be enhanced while maintaining a stability, (ii) a training data (*Dₜᵣₐᵢₙ*), and (iii) a validation data (*Dᵥₐₗ*)*,* wherein the neural network architecture (*N*) comprises *L* number of network layers, one or more initial weights (*W*), and one or more initial biases (*b*), and wherein the training data (*Dₜᵣₐᵢₙ*) and the validation data (*Dᵥₐₗ*) are associated with each task of a plurality of tasks; divide the neural network architecture into a first block and a second block, based on the *L* number of network layers, wherein the first block comprises the neural network architecture with a predefined number of initial network layers out of the *L* number of network layers, and the second block comprises the neural network architecture with remaining network layers out of the *L* number of network layers; form a first network configuration model and a second network configuration model using the first block and the second block, using a hybrid activation function, wherein the hybrid activation function comprises of a fixed activation function, and an adaptive activation function, and wherein the first network configuration model comprises the first block with the fixed activation function and the second block with the adaptive activation function, and the second network configuration model comprises the first block with the adaptive activation function and the second block with the fixed activation function; train the first network configuration model and the second network configuration model with the training data (*Dₜᵣₐᵢₙ*)*,* to obtain a first trained network configuration model and a second trained network configuration model, respectively; select an optimal network configuration model out of the first network configuration model and the second network configuration model, based on a validation accuracy of the first trained network configuration model and the second trained network configuration model, wherein the validation accuracy is calculated using the validation data (*Dᵥₐₗ*); and recommend the optimal network configuration model for training the neural network model *(N)* with the training data (*Dₜᵣₐᵢₙ*)*,* and the validation data (*Dᵥₐₗ*)*,* to obtain a trained neural network model, wherein the trained neural network model achieves an enhanced plasticity while maintaining the stability.

In yet another aspect, there are provided one or more non-transitory machine-readable information storage mediums comprising one or more instructions which when executed by one or more hardware processors cause a method to enhance plasticity and stability in neural networks in continual learning. The one or more instructions which when executed by the one or more hardware processors cause: receive (i) a neural network architecture of a neural network model (*N*) for which a plasticity is to be enhanced while maintaining a stability, (ii) a training data (*Dₜᵣₐᵢₙ*)*,* and (iii) a validation data (*Dᵥₐₗ*)*,* wherein the neural network architecture (*N*) comprises *L* number of network layers, one or more initial weights (*W*), and one or more initial biases (*b*), and wherein the training data (*Dₜᵣₐᵢₙ*) and the validation data (*Dᵥₐₗ*) are associated with each task of a plurality of tasks; divide the neural network architecture into a first block and a second block, based on the *L* number of network layers, wherein the first block comprises the neural network architecture with a predefined number of initial network layers out of the *L* number of network layers, and the second block comprises the neural network architecture with remaining network layers out of the *L* number of network layers; form a first network configuration model and a second network configuration model using the first block and the second block, using a hybrid activation function, wherein the hybrid activation function comprises of a fixed activation function, and an adaptive activation function, and wherein the first network configuration model comprises the first block with the fixed activation function and the second block with the adaptive activation function, and the second network configuration model comprises the first block with the adaptive activation function and the second block with the fixed activation function; train the first network configuration model and the second network configuration model with the training data (*Dₜᵣₐᵢₙ*)*,* to obtain a first trained network configuration model and a second trained network configuration model, respectively; select an optimal network configuration model out of the first network configuration model and the second network configuration model, based on a validation accuracy of the first trained network configuration model and the second trained network configuration model, wherein the validation accuracy is calculated using the validation data (*Dᵥₐₗ*); and recommend the optimal network configuration model for training the neural network model (*N*) with the training data (*Dₜᵣₐᵢₙ*)*,* and the validation data (*Dᵥₐₗ*)*,* to obtain a trained neural network model, wherein the trained neural network model achieves an enhanced plasticity while maintaining the stability.

In an embodiment, the predefined number of initial network layers in the first block is decided based on a type and a depth of the neural network model (*N*).

In an embodiment, training the first network configuration model with the training data (*Dₜᵣₐᵢₙ*)*,* to obtain the first trained network configuration model, comprises: initializing the one or more initial weights (*W*), the one or more initial biases (*b*), and one or more task specific parameters (*θ_{T}*) associated with the first network configuration model, wherein the one or more task specific parameters (*θ_{T}*) are associated with each task of the plurality of tasks; forward passing to the first network configuration model, each mini-batch at a time, of a plurality of mini-batches formed from the training data (*Dₜᵣₐᵢₙ*) at each iteration of one or more iterations, to calculate an output of an activation function at each network layer of the *L* number of network layers present in the first network configuration model, wherein the fixed activation function is applied on each network layer of the *L* number of network layers present in the first block and the adaptive activation function is applied on each network layer of the *L* number of network layers present in the second block; determining a value of the loss function of the first network configuration model, based on the output of an activation function at each network layer of the *L* number of network layers present in the first network configuration model; and updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the first trained network configuration model.

In an embodiment, training the second network configuration model with the training data (*Dₜᵣₐᵢₙ*)*,* to obtain the second trained network configuration model, comprises: initializing the one or more initial weights (*W*), the one or more initial biases (*b*), and one or more task specific parameters (*θ_{T}*) associated with the second network configuration model, wherein the one or more task specific parameters (*θ_{T}*) are associated with each task of the plurality of tasks; forward passing to the second network configuration model, each mini-batch at a time, of a plurality of mini-batches formed from the training data (*Dₜᵣₐᵢₙ*) at each iteration of one or more iterations, to calculate an output of an activation function at each network layer of the *L* number of network layers present in the second network configuration model, wherein the adaptive activation function is applied on each network layer of the *L* number of network layers present in the first block and the fixed activation function is applied on each network layer of the *L* number of network layers present in the second block; determining a value of the loss function of the second network configuration model, based on the output of an activation function at each network layer of the *L* number of network layers present in the second network configuration model; and updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the second trained network configuration model.

In an embodiment, the fixed activation function at each network layer of the *L* number of network layers is mathematically expressed as: ${h}^{l} = {σ}_{f} \left({W}^{l}{h}^{l - 1}+{b}^{l}\right)$ wherein *σ_{f}* is a fixed basis function, *W^{l} is* a weight matrix at a network layer *l, h*^{*l-*1} is the fixed activation function from previous network layer, and *b^{l}* is a bias vector at a network layer *l*.

In an embodiment, the adaptive activation function at each network layer of the L number of network layers is mathematically expressed as: ${h}_{T}^{l} = \left(1+{θ}_{T}\right) {σ}_{a} \left({W}^{l}{h}_{T}^{l - 1}+{b}^{l}\right)$ wherein *σₐ* is an adaptive basis function, *W^{l}* is a weight matrix at a network layer *l,* ${h}_{T}^{l - 1}$ is the adaptive activation function from previous network layer, *b^{l}* is a bias vector at a network layer *l,* and *θ_{T}* represents the one or more task specific parameters.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system to enhance plasticity and stability in neural networks in continual learning, in accordance with some embodiments of the present disclosure.
FIGS. 2A and 2B illustrate exemplary flow diagrams of a processor-implemented method to enhance plasticity and stability in neural networks in continual learning, using the system of FIG. 1, in accordance with some embodiments of the present disclosure.
FIG. 3 is an exemplary activation space showing a conceptual difference of the fixed activation function and the dynamic activation function in a task-specific feature extraction, in accordance with some embodiments of the present disclosure.
FIG. 4 is a flowchart showing the steps for training the first network configuration with the training data, to obtain the first trained network configuration, in accordance with some embodiments of the present disclosure.
FIG. 5 is a flowchart showing the steps for training the second network configuration with the training data, to obtain the second trained network configuration, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In recent years, deep neural networks (DNNs) have demonstrated significant advancements across various tasks in computer vision, natural language processing, and other broader fields of machine intelligence. Despite their success, the DNNs exhibit limited capacity for continual learning, as they are predominantly trained on static datasets and often fail to adapt to sequential tasks by incrementally acquiring new knowledge, a critical capability for addressing emerging challenges in real-world scenarios. To address these limitations, a continual learning approach is used to facilitate the reliable incremental acquisition of new information across sequential tasks, referred to as plasticity, while preventing the loss of previously acquired knowledge, known as stability. However, simultaneously achieving plasticity and stability in continual learning for neural networks presents significant challenges, leading to the persistent occurrence of catastrophic forgetting. This issue is referred to as the plasticity-stability dilemma.

While most conventional techniques focus on enhancing stability in continual learning, several approaches aim to improve plasticity, which is critical for adapting to new tasks. Collaborative learning-based strategies enhance plasticity by employing distillation chains that accelerate the training process, allowing the model to efficiently integrate new information. Besides, gradient-based techniques enhance plasticity by facilitating flexibility in the gradient retention from previous tasks. Also, backpropagation-based techniques focus on effectively re-initializing underutilized neurons (*zero-neurons*), ensuring improved plasticity. However, re-initializing zero neurons temporarily reactivates them, but this points to a more fundamental need for such non-linearities that prevent neurons from becoming permanently inactive, thereby supporting more robust, task-adaptive plasticity over time.

Further, several key research directions and strategies have been evolved to enhance the performance of the models. These include carefully controlling the weight update mechanism, utilizing feature map information for selectively retaining critical knowledge and developing rehearsing policies to remember what was learned in past tasks. Additionally, architecture-based approaches are often suggested for improving the memory and adaptability of continual learning models. Weight update strategies regulate the optimization trajectory based on the importance of learned weights under certain criteria. For instance, computing the importance of network weights using a diagonal approximation of the Fisher information matrix (FIM), and then discouraging (penalizing) updates that are important for old tasks. Other techniques provide importance measures through sensitivity analyses by tracking changes in weights.

Furthermore, Bayesian uncertainties are also explored to adaptively regularize weights or adaptively update the learning rate. Recent techniques focused on using feature map representations or their statistics. For instance, stabilizing the representations by fixing the early layers of the feature extractor to prevent representation shifts across tasks, while explicitly estimates the representation shift for replay to maintain the quality of learned features over time. Some conventional techniques decouple the feature space into two complementary subspaces dedicated to stability and plasticity components. This allows the application of different constraints to achieve a better balance between stability and plasticity.

Another set of conventional techniques for boosting the performance of continual learning frameworks comes under rehearsing policies. These policies usually manage small memory buffers of past samples or generate samples for previous tasks using generative models. The interesting aspect of managing a small memory buffer lies in selection of samples to store to ensure sufficient diversity. Techniques under these approaches range from random sampling (for example, Reservoir Sampling) to selection criteria that gradually amplify incidental bias in the replay buffer. On the other hand, generative model-based rehearsing policies rely on recreating samples from previous tasks. Architecture-based approaches either derived for fixed representational capacity or dynamically increase network capacity by growing the network explicitly as per demand. Approaches with fixed representational capacity range from binary masking to sparsity constraints-based network resource allocation. Growing network approaches include introducing independent sub-networks for each task and intermixing existing and new network modules.

However, any deep neural network architecture contains essential nonlinearities introduced through activation functions. These activation functions are critical to the success of any network models as they shape the capacity of the network to capture various complex patterns. As a result, the choice of activation functions directly affects the performance of networks on a variety of tasks. For instance, the Rectified Linear Unit (ReLU) function is simpler and faster compared to sigmoid and tanh, with widespread use in deep convolutional neural networks (CNNs). A Parametric Rectified Linear Unit (PReLU), a variant of ReLU, has achieved state-of-the-art performance in the ImageNet challenge. Leaky ReLU helps to mitigate the 'dying neuron' problem in ReLU by allowing the flow of gradient for negative values. On the other hand, Gaussian-based activations like Gaussian Error Linear Unit (GELU) resemble the ReLU function but provide a softer transition near the origin and smoothly negative weight values.

The Exponential Linear Unit (ELU) activation function introduces smooth transitions for negative values and thus reduces the risk of vanishing gradients. A self-regularized non-monotonic neural activation function (called Mish) is almost linear like ReLU for large positive input values and asymptotically approaches zero like GELU for large negative values. Thus, the technical challenges arise on: (i) how these activation functions operate within the context of continual learning (ii) Specifically, how do they influence the preservation and transfer of past knowledge, and (iii) in what ways could their implementation be addressed to enhance the integration of new information without losing prior learning.

The present disclosure solves the technical problems in the art with methods and systems to enhance plasticity and stability in neural networks in continual learning. The methods and systems of the present disclosure introduces a Hybrid non-linearity (herein after referred as 'HyNoL' in short) approach which augments network plasticity by integrating both fixed and adaptive non-linear strategies (fixed and adaptive activation functions/basis functions). The hybrid framework of the present disclosure enables the neural network to dynamically adjust its activations to meet the specific demands of varying tasks, facilitating efficient learning of new information. More specifically, the HyNoL redefines the computation of activations by introducing task dependent adaptable parameters.

These adaptive parameters influence the non-linear transformations, yielding an updated set of basis functions. The updated set serves as a function that adapts the contribution of each basis function according to the specific task at hand. The fixed non-linear components provide a robust foundation, capturing generalizable patterns across tasks and ensuring consistency in performance, even when faced with new data. Besides, the adaptive components offer flexibility, recalibrating to optimize task-specific learning. The dynamic reconfiguration of the present disclosure enables the network model to effectively capture both shared and unique features, enhancing its ability to generalize across tasks.

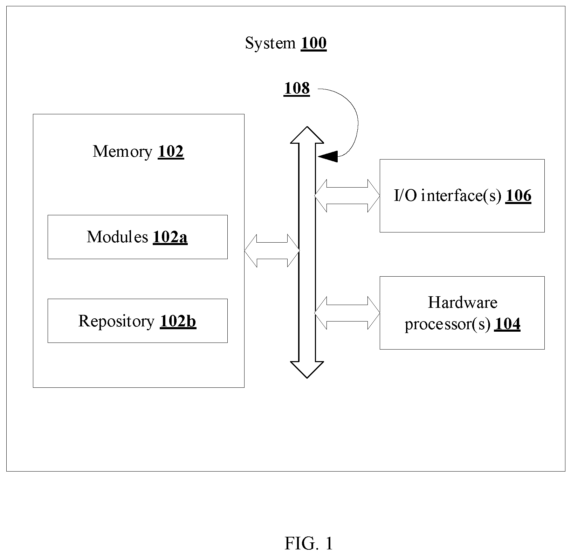

Referring now to the drawings, and more particularly to FIG. 1 through FIG. 5, where similar reference characters denote corresponding features consistently throughout the figures, there are shown preferred embodiments, and these embodiments are described in the context of the following exemplary systems and/or methods.

FIG. 1 is an exemplary block diagram of a system 100 to enhance plasticity and stability in neural networks in continual learning, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

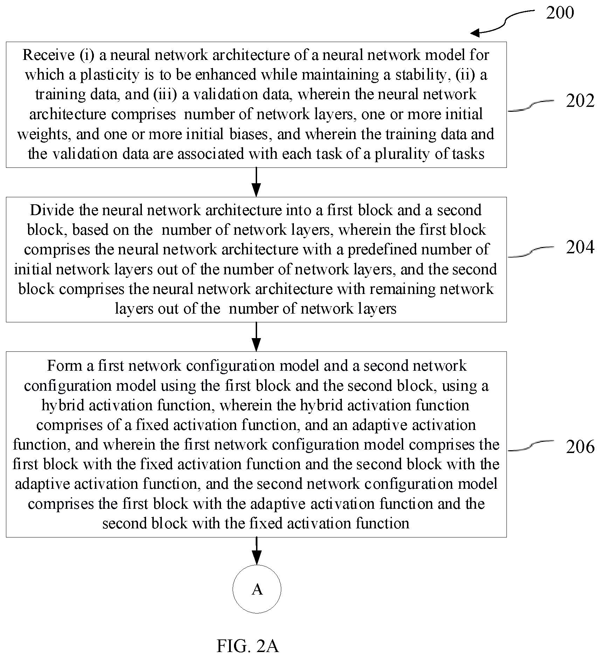

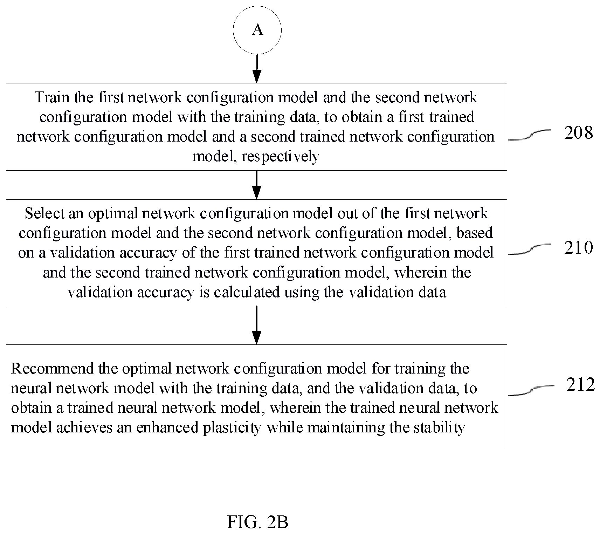

Referring to FIGS. 2A and 2B, components and functionalities of the system 100 are described in accordance with an example embodiment of the present disclosure. For example, FIGS. 2A and 2B illustrate exemplary flow diagrams of a processor-implemented method 200 to enhance plasticity and stability in neural networks in continual learning, using the system 100 of FIG. 1, in accordance with some embodiments of the present disclosure. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the system 100 is configured to receive, via the one or more input/output (I/O) interfaces 106 , (i) a neural network architecture of the neural network model (*N*) for which the plasticity is to be enhanced while maintaining the stability, (ii) a training data (*Dₜᵣₐᵢₙ*)*,* and (iii) a validation data (*Dᵥₐₗ*)*.* The neural network architecture *(N)* includes *L* number of network layers, one or more initial weights (*W*), and one or more initial biases (*b*). The *L* number of network layers is extracted from the architecture of the neural network model or may be provided by a user. The training data (*Dₜᵣₐᵢₙ*) and the validation data (*Dᵥₐₗ*) are associated with each task of a plurality of tasks to be performed by the neural network model given the neural network architecture. In an embodiment, the neural network model is one of Vision Transformer (ViT), a Residual Neural Network (ResNet), MobileNet, Visual Geometry Group (VGG) network model, and so on, in which the continual learning can be implemented. In an embodiment, the training data (*Dₜᵣₐᵢₙ*) and the validation data (*Dᵥₐₗ*) include a plurality of samples related to the plurality of the tasks and may be received from a repository.

At step 204 of the method 200, the one or more hardware processors 104 of the system 100 are configured to divide the neural network model (*N*) into a first block and a second block, based on the *L* number of network layers. The first block is otherwise called as a main block and includes the neural network model (*N*) with a predefined number of initial network layers out of the *L* number of network layers. The second block is otherwise called as a basic block or a residual block and includes the neural network model *(N)* with remaining network layers out of the *L* number of network layers. For example, if the neural network model *(N)* consists of total *L* number of network layers in the given neural network architecture. Consider the initial *x* number of network layers as the main block, then the remaining *L - x* number of the network layers constitutes the second block.

The predefined number of initial network layers in the first block is decided based on a type and a depth of the neural network model (*N*). For example, ResNet-32 consists of an initial convolutional layer followed by multiple basic blocks, grouped into stages (layer1, layer2, and layer3), each incorporating residual connections. In this case, the first block may include the initial convolutional layer, batch normalization, and the first stage of basic blocks (i.e., conv1, bn1, and layer1). Similarly, the second block consists of the subsequent stages, specifically layer 2 and layer 3.

In another example, The MobileNetV2 architecture consists of an initial convolutional layer, a sequence of inverted residual blocks, followed by a final convolutional layer and a classifier. In this case, the first block includes the initial convolutional layer, which processes raw input images. Similarly, the second block includes all the inverted residual blocks as well as the final convolutional layer.

In another example, for the VGG-like architectures, the first block consists of initial convolutional block comprising the first Conv2d layer, its corresponding activation, and the pooling layer. The second block consists of all subsequent convolutional layers and fully connected layers. In another example, for ViT like architectures, the first block consists of the first feed-forward block (FFN), which follows immediately after the initial attention layer. The second block consists of remaining 11 feed-forward blocks (FF2 to FF12).

At step 206 of the method 200, the one or more hardware processors 104 of the system 100 are configured to form a first network configuration and a second network configuration using the first block and a second block, using a hybrid activation function. The hybrid activation function includes a fixed activation function (ReLU, SELU, GELU, etc.), and an adaptive activation function. The first network configuration includes the first block with the fixed activation function and the second block with the adaptive activation function. Similarly, the second network configuration includes the first block with the adaptive activation function and the second block with the fixed activation function.

For any specific network model, the placement of the fixed and the adaptive activations is the decision making and critical aspect based on which the two configurations: the first network configuration and the second network configuration, can be formed. For example, in the case of ResNet-32, the fixed activation function in the first block is used to consistently within this block to maintain stable feature extraction in the early stages. The adaptive activation function in the second block is used to dynamically adjust its parameters in response to task-specific learning signals, enhancing flexibility and plasticity in deeper layers.

In the case of MobileNetV2, the fixed activation function (e.g., ReLU) in the first block may be employed to ensure stable and consistent feature extraction during the network's early stages. The adaptive activation function is utilized in the second block to dynamically adjust its parameters in response to learning dynamics. This adaptation promotes plasticity in deeper layers, where task-specific features are typically refined.

In the case of VGG-like networks, the fixed activation function (e.g., ReLU or Sigmoid) in the first block ensures the stable extraction of low-level features such as edges and textures, which are essential for reliable downstream processing. The adaptive activation function in the second block facilitates flexible and dynamic representation learning in the deeper layers, where abstract feature extraction and task-specific adaptation take place.

In the case of ViT, the fixed activation function (e.g., ReLU or GELU) in the first block ensures consistent low-level pattern transformation at the outset of the transformer stack. This stabilization aids in the early processing of embedded image patches, functioning similarly to the initial layers in convolutional neural networks (CNNs). The adaptive activation function in the second block enhances plasticity and enables task-specific feature extraction in deeper regions of the transformer. Such differentiation facilitates greater flexibility in adapting to new tasks, while preserving stable representations in early layers, an approach that is advantageous in continual learning scenarios.

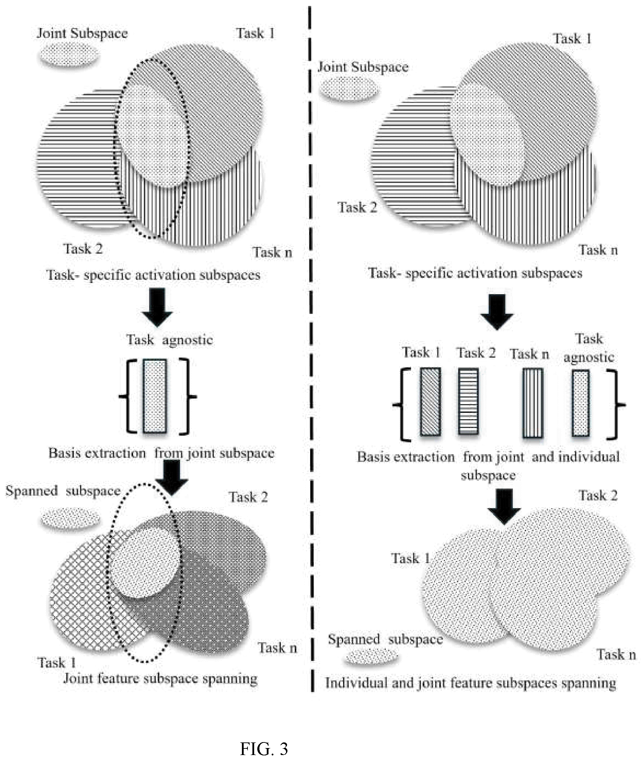

FIG. 3 is an exemplary activation space showing a conceptual difference of the fixed activation function and the dynamic activation function in a task-specific feature extraction, in accordance with some embodiments of the present disclosure. As shown in FIG. 3, consider the activation space of the neural network model as a multi-dimensional continuum. The contemporary techniques which only use fixed activation functions, such as ReLU, GELU, SELU and ELU activation functions typically extract basis functions (fixed activation) from joint subspace. Whereas the hybrid activation function of the present disclosure extracts activations from union of subspaces.

The fixed components (through the fixed activation function) occupy regions that are consistent across tasks, providing a stable backbone. In contrast, the adaptive components (through the adaptive activation function) focus on task-specific regions, enabling the network to integrate new information. This duality not only improves plasticity but also strengthens generalization, making the present disclosure particularly effective in continual learning settings.

Hence, the contemporary techniques span only the intersection of all task-specific subspaces whereas the technique of the present disclosure spans the entire feature subspace, facilitating continual learning. Thus, the hybrid activation function of the present disclosure forms a hybrid, non-linearity-based framework that enhances plasticity by capturing complex relationships within the data.

At step 208 of the method 200, the one or more hardware processors 104 of the system 100 are configured to train the first network configuration and the second network configuration with the training data (*Dₜᵣₐᵢₙ*)*,* to obtain a first trained network configuration and a second trained network configuration, respectively.

Consider the sequential set of plurality of tasks in equation (1) below: $T = \left\{{T}_{1}, {T}_{2},…, {T}_{N}\right\}$ (1) where each task Tₖ is associated with a dataset as follows in equation (2): ${D}_{k} = {\left\{\left({x}_{i}^{k}, { y}_{i}^{k}\right)\right\}}_{i = 1}^{{M}_{k}}$ (2) Whereas ${x}_{i}^{k} ∈ {ℝ}^{d}$ represents input features, ${y}_{i}^{k} ∈ {ℝ}^{c}$ denotes the corresponding labels. The aim is to learn each new task Tₖ such that the model's performance improves on Tₖ while maintaining its capability on previously learned tasks T₁, T₂, ... , Tₖ₋₁.

In standard DNNs, the activation functions ϕ(zᵢ) are fixed across all tasks, which limits the model's flexibility in learning task-specific features. In contrast, the present disclosure extends this by introducing adaptive components, where the activation for a task T is defined in equation (3): ${a}_{i} = ψ \left({z}_{i}, {θ}_{T}\right) = ϕ \left({z}_{i}\right) . g \left({θ}_{T}\right)$ (3) where g(θ_{T}) is a modulation function that adjusts the activation based on one or more task-specific parameters θ_{T}.

More specifically, consider the representation of activation spaces through subspaces. Let Sⱼₒᵢₙₜ denote the subspace formed by fixed non-linearities ${\left\{{ϕ}_{j}\left({z}_{i}\right)\right\}}_{j = 1}^{m}$, capturing features common to all tasks, while ${S}_{task}^{T}$ represents the subspace spanned by adaptive non-linearities ${\left\{{ψ}_{j}\left({z}_{i}, {θ}_{T}\right)\right\}}_{j = 1}^{m}$, which capture task-specific features. Mathematically it is represented as in equation (4), ${S}_{joint} = span {\left\{{ϕ}_{j}\left({z}_{i}\right)\right\}}_{j = 1}^{m} , { S}_{task}^{T} = span {\left\{{ψ}_{j}\left({z}_{i}, {θ}_{T}\right)\right\}}_{j = 1}^{m}$ (4)

The intersection ${S}_{joint} ∩ {S}_{taks}^{T}$ (from equation (4)) captures features that are shared across tasks, while the non-intersecting components ${S}_{task}^{T} \ {S}_{joint}$ capture the unique features required for the current task. By leveraging both shared and task specific subspaces, the given neural network model achieves higher plasticity, allowing for efficient learning of new tasks without substantial interference with existing knowledge. The hybrid framework (hybrid activation function) of the present disclosure enables the neural network model to dynamically adapt its activation space, optimizing the integration of new information while preserving essential knowledge from prior tasks. Thus, the hybrid framework (hybrid activation function) of the present disclosure effectively addresses the plasticity challenge in continual learning, enabling DNNs to better adapt to evolving task sequences.

In existing training paradigms with fixed basis function, basis/activation functions are typically fixed and applied uniformly across all tasks. However, such an approach does not account for the unique characteristics and requirements of different tasks, leading to suboptimal performance, especially in multi-task learning scenarios. A detailed mathematical formulation of the fixed basis function training paradigm is as follows. Consider a neural network model with L network layers. For a given network layer l, the pre-activation output z^{l} is computed as in equation (5): ${z}^{l} = {W}^{l} {h}^{l - 1} + {b}^{l}$ (5) Whereas ${W}^{l} ∈ {ℝ}^{{d}_{l} \times {d}_{l - 1}}$ is the weight matrix, ${b}^{l} ∈ {ℝ}^{{d}_{l}}$ is the bias vector, and ${h}^{l - 1} ∈ {ℝ}^{{d}_{l - 1}}$ is the activation from the previous layer. The activation function σ is then applied element-wise to z^{l} (equation (6)) to obtain the activation h^{l}: ${h}^{l} = σ \left({z}^{l}\right)$ (6)

The activation function σ is chosen from a set of standard functions such as ReLU, Sigmoid, Tanh, or Leaky ReLU, and remains constant across all layers and tasks. These fixed activation functions do not adapt to the specific characteristics of different tasks. From a linear algebra perspective, the activation function σ can be viewed as a basis function in the activation space. In this context, the fixed basis function paradigm implies that the basis functions are the same for all tasks, which limits the network's ability to represent task-specific features. Mathematically, the activation h^{l} can be seen as a projection of the pre-activation output z^{l} onto a fixed basis 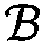 defined by the activation function σ in equation (7): ${h}^{l} = B \left({z}^{l}\right)$ (7)

To illustrate the limitations of this fixed activation approach, consider the scenario where the neural network model is trained on multiple tasks {T₁, T₂,..., T_{N}}. The equation (8) demonstrates output for task Tᵢ at layer l as follows: ${h}_{{T}_{i}}^{l} = σ \left({W}^{l}{h}_{{T}_{i}}^{l - 1}+{b}^{l}\right)$ (8)

Now consider the gradient of the loss function 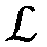 with respect to the weights W^{l} (equation (9)) during backpropagation. The gradient is given by: $\frac{\partial L}{\partial {W}^{l}} = \frac{\partial L}{\partial {h}_{{T}_{i}}^{l}} . \frac{\partial {h}_{{T}_{i}}^{l}}{\partial {z}_{{T}_{i}}^{l}} . \frac{\partial {z}_{{T}_{i}}^{l}}{\partial {W}^{l}}$ (9) For a general activation function σ, the derivative $\frac{\partial {h}_{{T}_{i}}^{l}}{\partial {z}_{{T}_{i}}^{l}}$ is: $\frac{\partial {h}_{{T}_{i}}^{l}}{\partial {z}_{{T}_{i}}^{l}} = σ ′ \left({z}_{{T}_{i}}^{l}\right)$ (10) Whereas σ'denotes the derivative of the activation function.

This function derivative is independent of the task, which means that the gradient updates do not account for task-specific variations. Consequently, the network's ability to learn task-specific features is limited, leading to a trade-off between tasks and potentially poor generalization. To further illustrate this, consider the task-specific parameter ${θ}_{{T}_{i}}^{l}$ for task Tᵢ at network layer *l*. The activation function can be modified in equation (11) to include this parameter: ${h}_{{T}_{i}}^{l} = σ \left({θ}_{{T}_{i}}^{l}{z}_{{T}_{i}}^{l}\right)$ (11)

However, in the fixed basis function paradigm, ${θ}_{{T}_{i}}^{l}$, is not considered, and the activation function remains as outlined in equation (12): ${h}_{{T}_{i}}^{l} = σ \left({z}_{{T}_{i}}^{l}\right)$ (12)

An alternate way of understanding is by considering the task-specific parameter ${Δθ}_{{T}_{i}}^{l}$ as in equation (13): $\begin{matrix}{θ}_{{T}_{i}}^{l} {x}_{j , i}^{l} = \left({θ}_{{T}_{i - 1}}^{l}+{Δθ}_{{T}_{i - 1}}^{l}\right) {x}_{j , i}^{l} \\ = {θ}_{{T}_{i - 1}}^{l} {x}_{j , i}^{l} + {Δθ}_{{T}_{i - 1}}^{l} {x}_{j , i}^{l}\end{matrix}$ (13) Since ${Δθ}_{{T}_{i - 1}}^{l}$ is not considered in the fixed basis function paradigm, the activation remains: ${θ}_{{T}_{i}}^{l} {x}_{j , i}^{l} = {θ}_{{T}_{i - 1}}^{l} {x}_{j , i}^{l}$ (14)

The equation (14) shows that the fixed basis function paradigm does not capture the task-specific component ${θ}_{{T}_{i - 1}}^{l} {x}_{j , i}^{l}$, leading to suboptimal adaptation to different tasks. Therefore, the fixed basis function training paradigm imposes significant constraints on the network's ability to adapt to different tasks. By using a fixed activation function, the network cannot effectively capture task-specific features, resulting in suboptimal performance in multi-task learning scenarios. This motivates the need for a more flexible approach that can adapt activation functions based on task-specific parameters.

Hybrid basis approach of the present disclosure: The fixed basis function paradigm imposes significant constraints on the network's ability to adapt to different tasks. The hybrid basis function approach aims to overcome these limitations by incorporating task-specific parameters into the activation functions, allowing the network to dynamically adjust its basis functions based on the task at hand. Consider a neural network with *L* layers. For a given layer *l,* the pre-activation output z*^{l}* is computed in equation (15) below: ${z}^{l} = {W}^{l} {h}^{l - 1} + {b}^{l}$ (15) where ${W}^{l} ∈ {ℝ}^{{d}_{l} \times {d}_{l - 1}}$ is the weight matrix, ${b}^{l} ∈ {ℝ}^{{d}_{l}}$ is the bias vector, and ${h}^{l - 1} ∈ {ℝ}^{{d}_{l - 1}}$ is the activation from the previous layer. In the hybrid basis function approach, some layers use fixed activation functions while others use adaptive activation functions as defined in the first and second network configuration models. The activation function *σ*_{T} for task T in network layer *l* can be defined as: ${σ}_{T} \left({z}_{T}^{l}\right) = \left\{\begin{matrix}{σ}_{f} \left({z}_{T}^{l}\right) & if layer l uses fixed actication \\ {σ}_{a} \left({z}_{T}^{l}, {θ}_{T}\right) & if layer l uses adaptive actication\end{matrix}\right.$ (16) where, *σ*_{f} is a fixed basis function (e.g., ReLU, Sigmoid, and *σ*ₐ is an adaptive basis function parameterized by the one or more task-specific parameters θ_{T}. The activation ${h}_{T}^{l}$ for task *T* at layer *l* is then given by equation (17): ${h}_{T}^{l} = {σ}_{T} \left({z}_{T}^{l}\right)$ (17)

Joint subspace: The present disclosure uses fixed basis functions σ_{f} in respective blocks (the first block and the second block) to span the joint space of all tasks. Mathematically, the activations ${h}_{T}^{l}$ in the block can be seen as projections onto a fixed basis 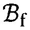 as in equation (18): $\begin{matrix}{h}^{l} = {B}_{f} \left({z}^{l}\right) = {σ}_{f} \left({z}_{T}^{l}\right) , \\ {where z}_{T}^{l} = {W}^{l} {h}_{T}^{l - 1} + {b}^{l} .\end{matrix}$ (18)

Task-specific subspaces: The present disclosure uses the adaptive basis functions σₐ in respective blocks (the first block and the second block) to span the individual task spaces. The activations ${h}_{T}^{l}$ in the architecture's block can be seen as projections onto an adaptive basis 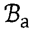 parameterized by task-specific parameters θ_{T} as described in equation (19) as below: $\begin{matrix}{h}_{T}^{l} = {B}_{a} \left({z}_{T}^{l}, {θ}_{T}\right) = {σ}_{a} \left({z}_{T}^{l}, {θ}_{T}\right) , \\ {where z}_{T}^{l} = {W}^{l} {h}_{T}^{l - 1} + {b}^{l} .\end{matrix}$ (19)

Thus, the hybrid basis function (hybrid activation function) approach of the present disclosure combines both fixed and adaptive basis functions (fixed and adaptive activation functions) within the network architecture. Some layers use fixed basis functions to capture the joint subspace of all tasks, while other layers use adaptive basis functions to capture task-specific subspaces. This hybrid approach allows the network to capture features of both individual and joint subspaces simultaneously, resulting in better feature extraction capability and enhanced plasticity.

Feature Vector: The feature vector ${h}_{T}^{l}$ captures both joint and task-specific features. The fixed basis functions σ_{f} ensure that common features across tasks are captured, while the adaptive basis functions σₐ allow the network to capture task-specific features. This hybrid approach allows the network to dynamically adjust its basis functions based on task-specific parameters, improving its ability to capture task-specific features and enhancing overall performance in multi-task learning scenarios. Mathematically, the feature vector ${h}_{T}^{l}$ can be expressed as: ${h}_{T}^{l} = \left\{\begin{matrix}{σ}_{f} \left({W}^{l}{h}_{T}^{l - 1}+{b}^{l}\right) & if layer l uses fixed actication \\ \left(1+{θ}_{T}\right) {σ}_{a} \left({W}^{l}{h}_{T}^{l - 1}+{b}^{l}\right) & if layer l uses adaptive actication\end{matrix}\right. ,$ (20) where α ∈ [0,1] is the weighting factor that balances the contributions of the fixed and adaptive components. More specifically, the equation (20) shows that our strategy not only captures the joint feature subspace (through σ_{f}) but also the task-specific feature subspace (through σₐ). The combination of these two components, enhancing plasticity in continual learning.

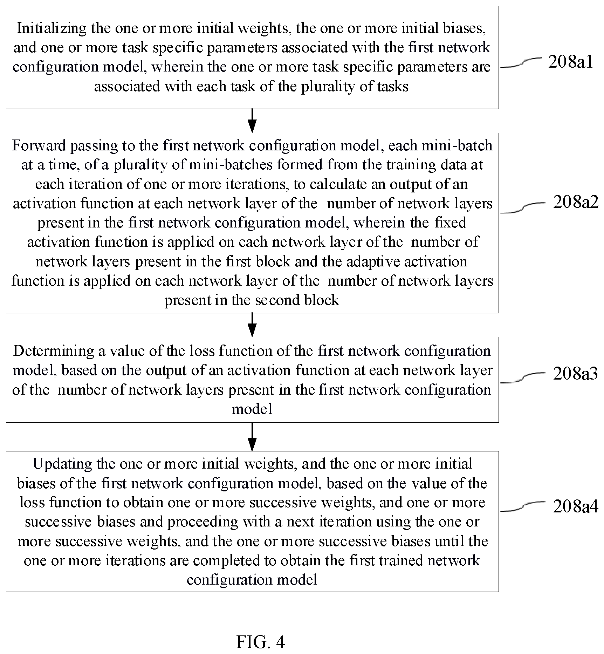

FIG. 4 is a flowchart showing the steps for training the first network configuration with the training data, to obtain the first trained network configuration, in accordance with some embodiments of the present disclosure. As shown in FIG. 4, training the first network configuration with the training data (*Dₜᵣₐᵢₙ*)*,* to obtain the first trained network configuration, is explained through steps 208a1 to 208a4.

At step 208a1, the one or more initial weights (*W*), the one or more initial biases (*b*), and one or more task specific parameters (*θ_{T}*) associated with the first network configuration are initialized. The one or more task specific parameters (*θ_{T}*) are associated with each task of the plurality of tasks (208a1). More specifically in case of the classification problem of objects (for example, cats and rats), the one or more task specific parameters (*θ_{T}*) are the one or more features of the objects (features of cats and rats) that are critical for the network model to classify the appropriate objects (for example, cats and rats).

At step 208a2, each mini-batch is passed forward at a time to calculate an output of an activation function at each network layer of the *L* number of network layers present in the first network configuration using equation (20). Each mini-batch is of a plurality of mini-batches formed from the training data (*Dₜᵣₐᵢₙ*) at each iteration of one or more iterations. The fixed activation function is applied on each network layer of the *L* number of network layers present in the first block and the adaptive activation function is applied on each network layer of the *L* number of network layers present in the second block, to achieve the Hybrid Non-Linearity (HyNoL) as mentioned in equation (20).

At step 208a3, a value of the loss function of the first network configuration, is determined based on the output of an activation function at each network layer of the *L* number of network layers present in the first network configuration. More specifically, the loss is calculated between the predicted output by the first network configuration and the actual target value.

At step 208a4, the one or more initial weights (*W*), and the one or more initial biases (*b*) of the first network configuration, are updated based on the value of the loss function to obtain one or more successive weights (*W*), and one or more successive biases (*b*). More specifically, if the value of the loss function is less than a predefined threshold, then the one or more initial weights (*W*), and the one or more initial biases (*b*) are updated. The training process is proceeded with a next iteration using the one or more successive weights (*W*), and the one or more successive biases (*b*) until the one or more iterations are completed to obtain the first trained network configuration.

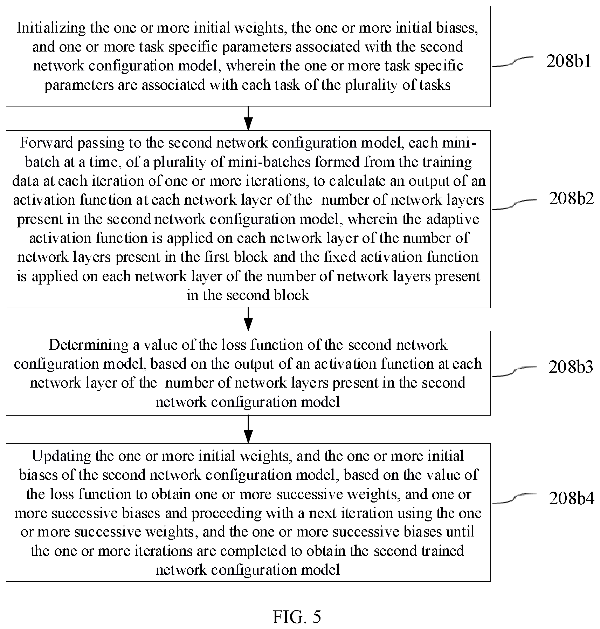

FIG. 5 is a flowchart showing the steps for training the second network configuration with the training data, to obtain the second trained network configuration, in accordance with some embodiments of the present disclosure. As shown in FIG. 5, training the second network configuration with the training data (*Dₜᵣₐᵢₙ*)*,* to obtain the second trained network configuration, is explained through steps 208b1 to 208b4.

At 208b1, the one or more initial weights (*W*), the one or more initial biases (*b*), and one or more task specific parameters (*θ_{T}*) associated with the second network configuration are initialized. The one or more task specific parameters (*θ_{T}*) are associated with each task of the plurality of tasks (208a1). More specifically in case of the classification problem of objects (for example, cats and rats), the one or more task specific parameters (*θ_{T}*) are the one or more features of the objects (features of cats and rats) that are critical for the network model to classify the appropriate objects (for example, cats and rats).

At step 208b2, each mini-batch is passed forward at a time to calculate an output of an activation function at each network layer of the *L* number of network layers present in the second network configuration using equation (20). Each mini-batch is of a plurality of mini-batches formed from the training data (*Dₜᵣₐᵢₙ*) at each iteration of one or more iterations. The adaptive activation function is applied on each network layer of the *L* number of network layers present in the first block and the fixed activation function is applied on each network layer of the *L* number of network layers present in the second block, to achieve the Hybrid Non-Linearity (HyNoL) as mentioned in equation (20).

At step 208b3, a value of the loss function of the second network configuration, is determined based on the output of an activation function at each network layer of the *L* number of network layers present in the second network configuration. More specifically, the loss is calculated between the predicted output by the second network configuration and the actual target value.

At step 208b4, the one or more initial weights (*W*), and the one or more initial biases (*b*) of the second network configuration, are updated based on the value of the loss function to obtain one or more successive weights (*W*), and one or more successive biases (*b*). More specifically, if the value of the loss function is less than a predefined threshold, then the one or more initial weights (*W*), and the one or more initial biases (*b*) are updated. The training process is proceeded with a next iteration using the one or more successive weights (*W*), and the one or more successive biases (*b*) until the one or more iterations are completed to obtain the second trained network configuration.

Gradient Analysis: To analyze the impact of the hybrid basis function approach (with hybrid activation functions), consider the gradient of the loss function 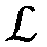 with respect to the weights W^{l} as expressed in equation (21) during backpropagation. The gradient is given by: $\frac{\partial L}{\partial {W}^{l}} = \frac{\partial L}{\partial {h}_{T}^{l}} . \frac{\partial {h}_{T}^{l}}{\partial {z}_{T}^{l}} . \frac{\partial {z}_{T}^{l}}{\partial {W}^{l}}$ (21) For the hybrid basis function, the derivative $\frac{\partial {h}_{T}^{l}}{\partial {z}_{T}^{l}}$ defined in equation (22) depends on whether the layer uses a fixed or adaptive activation function: $\frac{\partial {h}_{T}^{l}}{\partial {z}_{T}^{l}} = \left\{\begin{matrix}{σ}_{f}^{′} \left({z}_{T}^{l}\right) & if layer l uses fixed actication \\ \frac{\partial {σ}_{a} \left({z}_{T}^{l}, {θ}_{T}\right)}{{z}_{T}^{l}} & if layer l uses adaptive actication\end{matrix}\right.$ (22)

The adaptive component σₐ allows the activation function to adjust based on task-specific parameters θ_{T}, capturing task-specific variations that the fixed component σ_{f} cannot. This task-specific adaptation is reflected in the gradient, enabling the network to learn more effectively for each task. Note that for the experimentation, σₐ(.) = (1 + θ_{T}).σ_{f}(.) is considered, where θ_{T} is adaptable across task T.

At step 210 of the method 200, the one or more hardware processors 104 of the system 100 are configured to select an optimal network configuration out of the first network configuration and the second network configuration, based on a validation accuracy of the first trained network configuration and the second trained network configuration. The validation accuracy of the first trained network configuration and the second trained network configuration is calculated using the validation data (*Dᵥₐₗ*)*.* The network configuration associated with the first trained network configuration and the second trained network configuration, whose validation accuracy is more (better) is selected as the optimal network configuration.

At step 212 of the method 200, the one or more hardware processors 104 of the system 100 are configured to recommend the optimal network configuration for training the neural network model *(N)* with the training data (*Dₜᵣₐᵢₙ*)*,* and the validation data (*Dᵥₐₗ*) using the hybrid basis functions (equation (20)) to obtain a trained neural network model. The trained neural network model achieves enhanced plasticity while maintaining the stability.

Exemplary Pseudo code for selecting the best optimal model configuration as explained at step 210 of the method 200 and training the neural network (N) to obtain the trained neural network model as explained at step 212 of the method 200, is below:

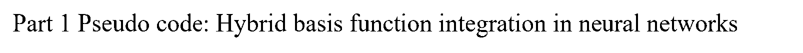

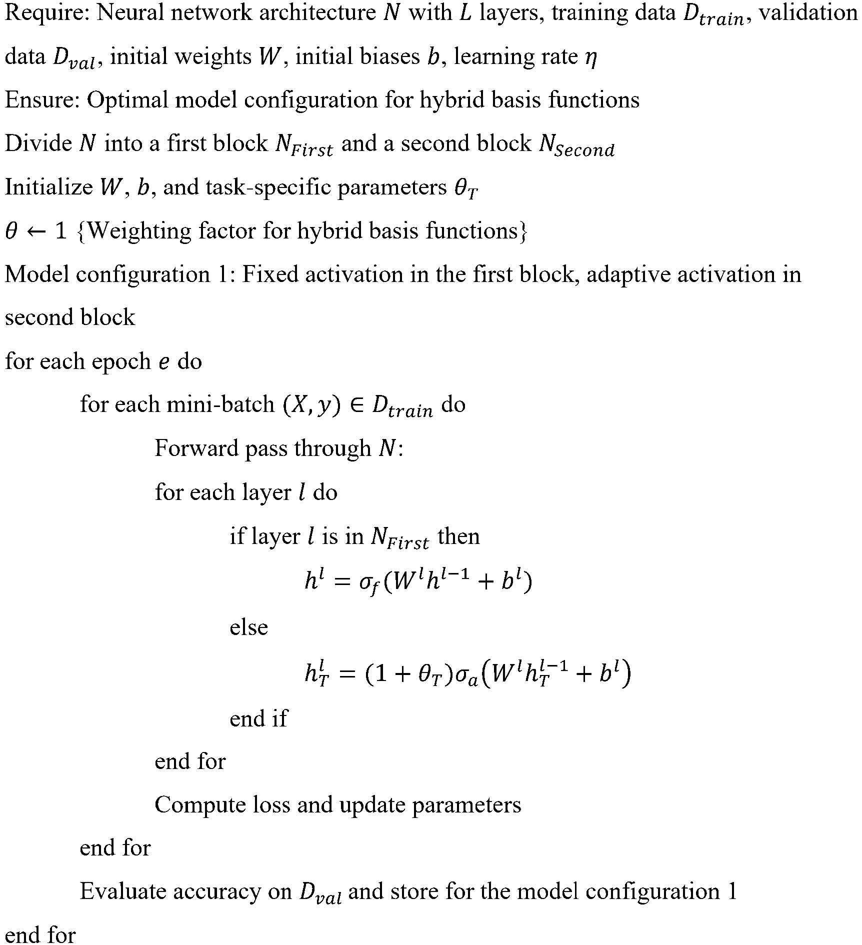

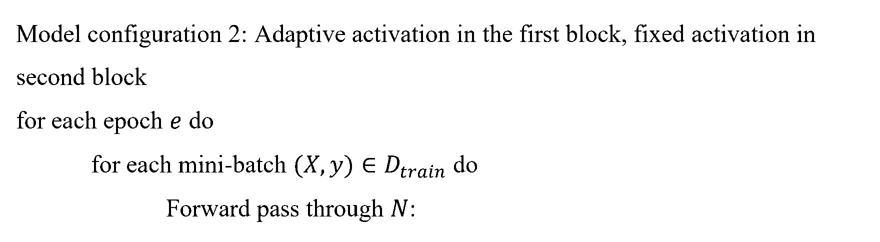

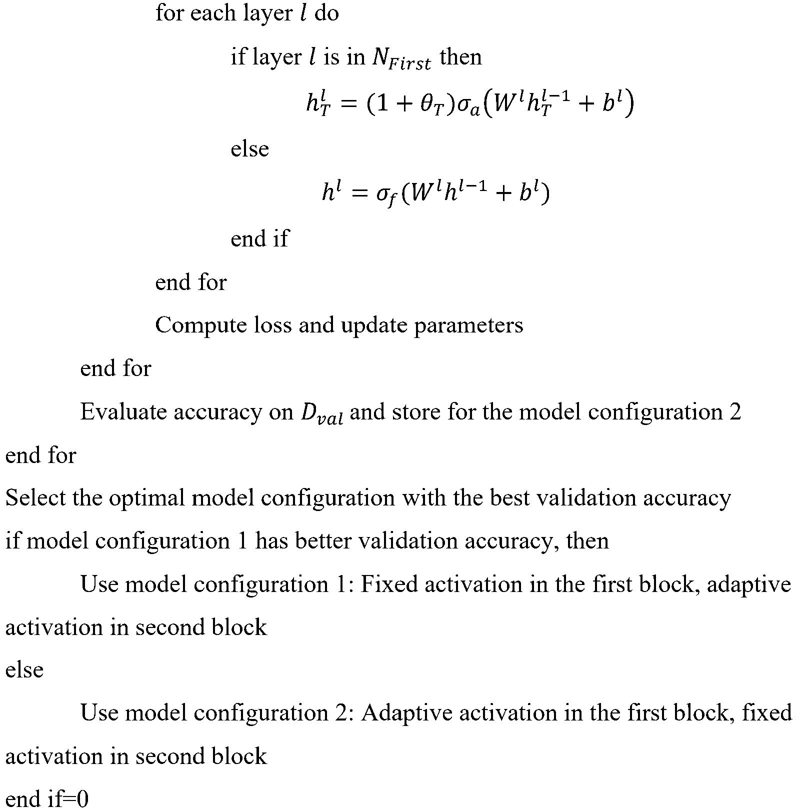

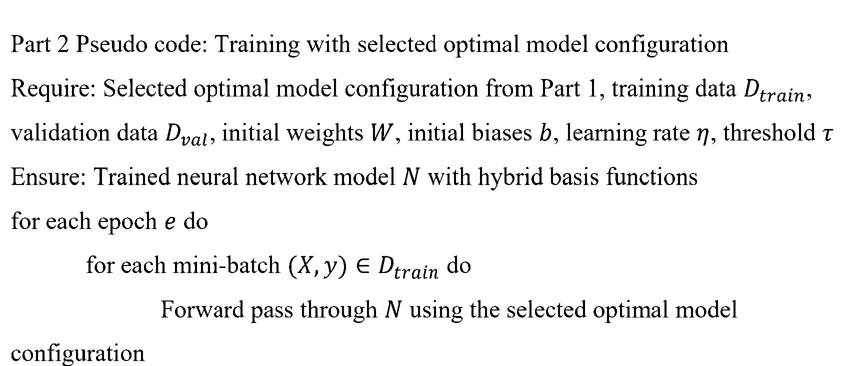

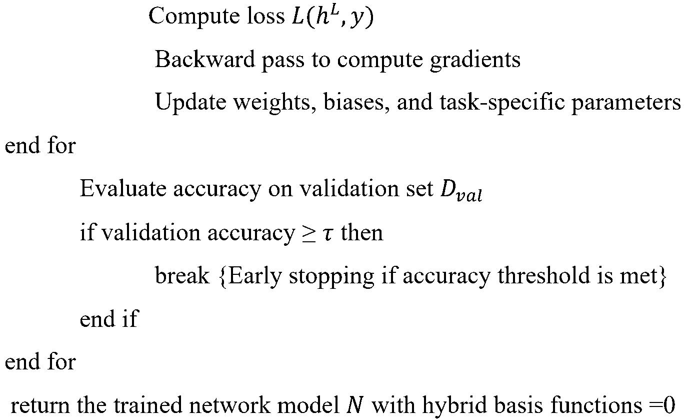

The methods and systems of the present disclosure introduce the Hybrid Non-Linearity (HyNoL) that integrates a hybrid non-linearity strategy to enhance plasticity in continual learning. The present disclosure conceptualizes neuron activations as basis functions in activation space, combining both adaptive and fixed non-linear elements. By redefining the activation function with adaptable parameters, the neural network architecture promotes effective feature representation and stabilizes the learning process. Specifically, adaptive non-linearities enable the neural network to dynamically adjust its basis functions by scaling them with task-specific parameters, thereby capturing complex relationships within the data and adapting to task specific subspaces. In contrast, non-linearities with fixed coefficients provide consistent transformations across the input space, acting as a set of basis functions that ensure robust feature representation.

Thus, the non-linearity in continual learning enhances the adaptability of the neural network model. The adaptability (through adaptive activation function) of the present disclosure enables the neural network model with the necessary flexibility to capture complex relationships that may not be effectively represented by fixed functions alone. By allowing the activation functions to adjust, the network effectively reshapes its basis functions in response to changing data distributions, thereby enhancing its capacity for generalization and improving performance in continual learning environments.

The hybrid architecture formed of the first network configuration and the second network configuration by dividing the neural network into blocks, integrates both adaptive and fixed non-linearities, creating a flexible framework that dynamically adapts to meet task-specific requirements. The hybrid non-linearity strategy of the present disclosure significantly improves plasticity by allowing the neural network to dynamically modify its basis functions to capture complex relationships within the data, leading to superior performance in continual learning scenarios.

### Example Scenario:

The methods and systems of the present disclosure (HyNoL) were evaluated using benchmark datasets such as CIFAR-10, CIFAR-100, and Tiny ImageNet, to evaluate the accuracy of the trained neural network models. The benchmark datasets were utilized for both task and class-incremental learning and are split into training and testing sets.

CIFAR-10 dataset (https://github.com/wichtounet/cifar-10/blob/master/LICENSE): The CIFAR-10 dataset consists of 60000 32x32 colour images in 10 classes, with 6000 images per class. There are 50000 training images and 10000 test images. The dataset is divided into five training batches and one test batch, each with 10000 images. The test batch contains exactly 1000 randomly-selected images from each class. The training batches contain the remaining images in random order, but some training batches may contain more images from one class than another. Between them, the training batches contain exactly 5000 images from each class including Airplane, automobile, bird, cat, deer, dog, frog, horse, ship, and truck.

CIFAR-100 dataset (https://github.com/JinLi711/CIFAR-100/blob/master/LICENSE): The CIFAR-100 dataset has 100 classes containing 600 images each. There are 500 training images and 100 testing images per class. The 100 classes are grouped into 20 super classes. Each image comes with a "fine" label (the class to which it belongs) and a "coarse" label (the superclass to which it belongs).

Tiny ImageNet (https://github.com/DennisHanyuanXu/Tiny-ImageNet/blob/master/LICENSE): The Tiny ImageNet contains 200 image classes, a training dataset of 100,000 images, a validation dataset of 10,000 images, and a test dataset of 10,000 images. All images are of size 64×64.

The detailed evaluation of the HyNoL integrated with various continual learning frameworks are described, demonstrating consistent improvements in task-specific plasticity (Acc) and reductions in task-aware forgetting (Forg). The conventional approaches (contemporary approaches) such as Elastic Weight Consolidation (EWC), Elastic Weight Consolidation - Auxiliary Network Continual Learning (EWC-ANCL), Memory aware synapses (MAS), Memory aware synapses - Auxiliary Network Continual Learning (MAS-ANCL), Learning without forgetting (LWF), Learning without forgetting - Auxiliary Network Continual Learning (LWF-ANCL), Less-forgetting learning (LFL), Less-forgetting learning - Auxiliary Network Continual Learning (LFL-ANCL), joint (obtained by training the network such as ResNet-18 on entire datasets), and Learning without memorizing (LWM).

Tables 1A, 1B, and 1C show comparison results of the HyNoL of the present disclosure with the contemporary techniques in terms of task-specific plasticity (Acc) and reductions in task-aware forgetting (Forg), on CIFAR-10, CIFAR-100 and Tiny ImageNet, respectively. The results as shown in tables 1A, 1B, and IC validate the robustness of the HyNoL of the present disclosure in enhancing adaptability and mitigating catastrophic forgetting. For the conventional approach (contemporary approach) of EWC, the HyNoL of the present disclosure improves Acc by 1.5% on CIFAR-10, 5.8% on CIFAR-100, and 6.9% on Tiny ImageNet. Forgetting is consistently reduced, with a 0.3% drop on CIFAR-10 and 1.4% on Tiny ImageNet. Another conventional approach (contemporary approach) of EWC-ANCL shows significant gains when paired with the HyNoL of the present disclosure, achieving a 3.7% improvement in Acc on CIFAR-10 and reducing Forg by 6.0% on the same dataset.

**Table 1A**

| Techniques-CIFAR-10 | | **Acc(↑)** | **Forg (1)** |
|---|---|---|---|
| EWC | Standard | 68\pm 12.5 | **6.4** |
| | With HyNoL | **70\pm 12.3** | 6.1 |
| EWC-ANCL | Standard | 71 \pm 14.7 | 12.4 |
| | With HyNoL | **74 \pm 11.2** | 6.4 |
| MAS | Standard | 71\pm 12.8 | **1.1** |
| | With HyNoL | **72\pm 15.3** | 7.2 |
| MAS-ANCL | Standard | 68 \pm 15.1 | 15.5 |
| | With HyNoL | **70 \pm 11.5** | **6.4** |
| LWF | Standard | 83.6 \pm 9.0 | 4.2 |
| | With HyNoL | 82.9 \pm 10.4 | **1.1** |
| LWF-ANCL | Standard | **86.1 \pm 7.2** | **0.8** |
| | With HyNoL | 78 \pm 10.34 | 2.3 |
| LFL | Standard | 80 \pm 11.5 | **4.2** |
| | With HyNoL | **82 \pm 11.0** | 4.8 |
| LFL-ANCL | Standard | 75 \pm 10.7 | 6.9 |
| | With HyNoL | **83 \pm 10.3** | **5.6** |
| Joint | Standard | 91.1 \pm 6.3 | -0.7 |
| | With HyNoL | **92.2 \pm 5.6** | **-0.1** |
| LWM | Standard | 46 \pm 19.5 | 27.3 |
| | With HyNoL | **47 \pm 19.5** | **24.5** |
| Pm = plus and minus | | | |

**Table 1B**

| Techniques-CIFAR-100 | | **Acc(↑)** | **Forg (↓)** |
|---|---|---|---|
| EWC | Standard | 35.9\pm 5.7 | **4** |
| | With HyNoL | **41.6\pm 16.2** | **3.8** |
| EWC-ANCL | Standard | 45.4 \pm 5.3 | 9.3 |
| | With HyNoL | 44.8 \pm 5.8 | **8.3** |
| MAS | Standard | 41.3\pm 5.2 | **3** |
| | With HyNoL | **44.6\pm 5.2** | 4.1 |
| MAS-ANCL | Standard | 45.7 \pm 5.6 | 5.7 |
| | With HyNoL | **44.8 \pm 5.8** | 6.4 |
| LWF | Standard | 58.3 \pm 7.6 | 2.5 |
| | With HyNoL | **61.4 \pm 5.7** | **2.5** |
| LWF-ANCL | Standard | 58.9 \pm 6.6 | 4.7 |
| | With HyNoL | **68.3 \pm 8.2** | **1.7** |
| LFL | Standard | 55.1 \pm 6.1 | **3.9** |
| | With HyNoL | **57.1 \pm 5.3** | 4.3 |
| LFL-ANCL | Standard | 57.6 \pm 7.5 | 10.2 |
| | With HyNoL | **58.7 \pm 7.5** | **9.3** |
| Joint | Standard | 79.5 \pm 6.2 | -2.5 |
| | With HyNoL | **83.7 \pm 6.7** | **-0.5** |
| LWM | Standard | 50 \pm 11.1 | 23.1 |
| | With HyNoL | **53 \pm 11.3** | **22.5** |
| Pm = plus and minus | | | |

**Table 1C**

| Techniques-Tiny ImageNet | | **Acc(↑)** | **Forg (1)** |
|---|---|---|---|
| EWC | Standard | 31.8\pm 4.9 | **1.5** |
| | With HyNoL | **38.7\pm 4.6** | 2.6 |
| EWC-ANCL | Standard | 40.9 \pm 4.7 | 5.3 |
| | With HyNoL | 39.4 \pm 6.4 | **3.5** |
| MAS | Standard | 36.1\pm 4.2 | 2.9 |
| | With HyNoL | **41.2\pm 4.6** | **1.6** |
| MAS-ANCL | Standard | 45.1 \pm 6.3 | **4.3** |
| | With HyNoL | 42.4 \pm 5.6 | **4.3** |
| LWF | Standard | 50.7 \pm 6.2 | **3.3** |
| | With HyNoL | **60.0 \pm 7.2** | 5.3 |
| LWF-ANCL | Standard | **54.4 \pm 7.5** | 6.5 |
| | With HyNoL | 53.5 \pm 8.0 | **4** |
| LFL | Standard | 47.0 \pm 6.0 | **2.2** |
| | With HyNoL | **50.4 \pm 5.8** | 3.9 |
| LFL-ANCL | Standard | 48.2 \pm 7.2 | 10.2 |
| | With HyNoL | 47.6 \pm 8.0 | **8.1** |
| Joint | Standard | **63.4 \pm 5.7** | **0.3** |
| | With HyNoL | 62.2 \pm 5.7 | 0 |
| LWM | Standard | 42 \pm 10.3 | 16.9 |
| | With HyNoL | **43 \pm 11.0** | **15.1** |
| Pm = plus and minus | | | |

For another conventional approach (contemporary approach) of MAS, the HyNoL of the present disclosure offers reliable improvements in Acc, particularly on Tiny ImageNet with a 5.1% gain, though it slightly increases Forg on CIFAR-10 by 6.1%. Similarly, another conventional approach (contemporary approach) of MAS-ANCL benefits from the integration, with the HyNoL of the present disclosure reducing Forg by 9.1% on CIFAR-10 and delivering robust performance across CIFAR-100 and Tiny ImageNet.

Other conventional approaches (contemporary approach) of knowledge distillation such as LWF and LWF-ANCL saw substantial improvements with the HyNoL of the present disclosure. For instance, LWF achieves an 8.3% increase in Acc on Tiny ImageNet, while LWFANCL achieves a 9.4% improvement on CIFAR-100 and reduces Forg on the same dataset by 3.0%. On CIFAR10, LWF-ANCL maintains a strong Forg score of 2.3%, demonstrating the HyNoL of the present disclosure ability to enhance long-term retention.

For other conventional approaches based of feature learning frameworks such as LFL and LFL-ANCL, the HyNoL of the present disclosure introduces meaningful improvements. LFL achieves an 8.3% boost in Acc on Tiny ImageNet, while LFL-ANCL shows significant reductions in Forg, notably by 1.3% on CIFAR-100. This demonstrates the HyNoL of the present disclosure efficacy in balancing adaptability and stability in feature-based continual learning.

Under joint training, the HyNoL of the present disclosure consistently provides superior performance. It improves Acc on CIFAR-100 by 4.2% and maintains a competitive Forg score on Tiny ImageNet, reducing it to just 1.0%. Finally, for conventional memory-based techniques such LWM, the HyNoL of the present disclosure increases Acc on CIFAR-100 by 3.4% while reducing Forg by 1.8%, highlighting its effectiveness across diverse approaches. The results establish the HyNoL of the present disclosure as a robust framework that leverages hybrid non-linearities to dynamically adapt to task-specific requirements while preserving shared knowledge.

The improved performance of the HyNoL of the present disclosure is particularly due to its architectural division, which integrates hybrid non-linearities-one part employing adaptive variants of standard activation functions and the other utilizing fixed activation functions. The architecture design of the HyNoL of the present disclosure enables a balanced mechanism, where the adaptive non-linearities allow the network to adjust its representations dynamically for each specific task, while the fixed non-linearities ensure stability by preserving shared knowledge across tasks. The combination of these two components facilitates the retention of previously learned knowledge and mitigates forgetting, a core challenge in continual learning. Moreover, the hybrid structure reduces the occurrence of dying neurons, where certain neurons become inactive and fail to contribute to learning. By maintaining both dynamic and static non-linearities, the HyNoL of the present disclosure enhances the overall capacity of the network, allowing it to retain relevant features for new tasks while preserving previously learned representations.

The impact of the hybrid activation of the present disclosure on task-aware accuracy across various network architectures and datasets were demonstrated, emphasizing its ability to enhance performance in diverse scenarios. Tables 2A, 2B, and 2C show the accuracy comparison results with the standard activations on CIFAR-10, CIFAR-100 and Tiny ImageNet, respectively. As detailed in tables 2A, 2B, and 2C, the HyNoL of the present disclosure consistently surpasses standard activation functions such as ReLU, SELU, and Mish. The most significant improvements are observed in deeper architecture and complex datasets, showcasing the adaptability and effectiveness of the HyNoL of the present disclosure in addressing challenging scenarios.

**Table 2A**

| Techniques-CIFAR-10 | | **MobileNet** | **ResNet-56** | **ResNet18** |
|---|---|---|---|---|
| RELU | Standard | 88.6\pm 8.29 | 87.4\pm 10.2 | 90.28\pm 7.75 |
| | With HyNoL | **89.3\pm 7.85** | **89.80\pm 6.6** | **91.2\pm 6.8** |
| SELU | Standard | 52.5 \pm 10.3 | 93.2 \pm 5.8 | 88.8 \pm 8.94 |
| | With HyNoL | **90.4 \pm 6.86** | **93.85 \pm 5.06** | **89.95 \pm 7.46** |
| Mish | Standard | **91.2 \pm 7.12** | 90.9 \pm 6.76 | **93.27 \pm 5.36** |
| | With HyNoL | 90.8 \pm 5.88 | **93.07 \pm 5.36** | 92.68 \pm 5.94 |
| GELU | Standard | **90.02 \pm 7.04** | **92.57 \pm 5.7** | **93.0 \pm 5.19** |
| | With HyNoL | 70.4 \pm 4.9 | 70.3 \pm 6.1 | 70.3 \pm 3.3 |
| ELU | Standard | 90.3 \pm 7.68 | 93.6 \pm 4.22 | **91.575 \pm 6.93** |
| | With HyNoL | **91.12 \pm 6.28** | **93.6 \pm 5.23** | 90.8 \pm 6.06 |
| PreLU | Standard | **91.5 \pm 6.5** | 89.12 \pm 8.14 | **91.65 \pm 5.56** |
| | With HyNoL | 89.7 \pm 7.46 | **92.45 \pm 6.0** | 91.3 \pm 6.87 |
| Leaky ReLU | Standard | **89.3 \pm 7.85** | 52.8 \pm 21.9 | 90.65 \pm 6.99 |
| | With HyNoL | 88.9 \pm 9.16 | **63.7 \pm 27.9** | **91.32 \pm 6.8** |
| Pm = plus and minus | | | | |

**Table 2B**

| Techniques-CIFAR-100 | | **MobileNet** | **ResNet-56** | **ResNet18** |
|---|---|---|---|---|
| RELU | Standard | 90.28\pm 7.75 | 66.74\pm 4.6 | 65.4\pm 7.1 |
| | With HyNoL | **91.2\pm 6.8** | **68.93 \pm 5.18** | **66.0 \pm 6.2** |
| SELU | Standard | 88.8 \pm 8.94 | 29.58 \pm 4.17 | **75.7 \pm 5.5** |
| | With HyNoL | **89.95 \pm 7.46** | **71.05 \pm 5.12** | 74.8 \pm 4.8 |
| Mish | Standard | **93.27 \pm 5.36** | **71.82 \pm 5.69** | 71.0 \pm 4.6 |
| | With HyNoL | 92.68 \pm 5.94 | 70.35 \pm 5.47 | **74.7 \pm 5.3** |
| GELU | Standard | **93.0 \pm 5.19** | 69.45 \pm 6.18 | 69.8 \pm 4.7 |
| | With HyNoL | 70.3 \pm 3.3 | **91.6 \pm 5.93** | **91.15 \pm 6.84** |
| ELU | Standard | **91.575 \pm 6.93** | 65.98 \pm 5.38 | 74.2 \pm 3.3 |
| | With HyNoL | 90.8 \pm 6.06 | **69.7 \pm 4.7** | **76.7 \pm 2.9** |
| PreLU | Standard | **91.65 \pm 5.56** | **69.79 \pm 5.16** | 69.6 \pm 3.4 |
| | With HyNoL | 91.3 \pm 6.87 | 69.0 \pm 4.4 | **72.3 \pm 2.5** |
| Leaky ReLU | Standard | 90.65 \pm 6.99 | **68.93 \pm 5.20** | 58.8 \pm 6.0 |
| | With HyNoL | **91.32 \pm 6.8** | 67.32 \pm 3.7 | **67.2 \pm 2.7** |
| Pm = plus and minus | | | | |

**Table 2C**

| Techniques-Tiny ImageNet | | **MobileNet** | **ResNet-56** | **ResNet18** | **ViT** |
|---|---|---|---|---|---|
| RELU | Standard | 28.72\pm 3.1 | 30.16\pm 14.6 | **67.84\pm 7.8** | 50.70\pm 8.91 |
| | With HyNoL | **30.21 \pm 11.67** | **34.01 \pm 15.48** | 63.2 \pm 8.49 | **51.37** \pm **8.16** |
| SELU | Standard | 12.65 \pm5.83 | **70.7 \pm 6.91** | 45.75 \pm 9.50 | 45.75\pm 9.5 |
| | With HyNoL | **31.18 \pm12.16** | 42.92 \pm 13.78 | **73.7 \pm 3.45** | **52.86**\pm **7.8** |
| Mish | Standard | 27.45\pm13. 52 | 34.7 \pm14.99 | 65.78 \pm 7.55 | 49.55\pm 9.25 |
| | With HyNoL | **30.94 \pm11.60** | **35.43 \pm 14.31** | **68.5 \pm 7.0** | **51.78\*pm* 7.71** |
| GELU | Standard | **30.02 \pm1.27** | 39.72 \pm12.11 | 67.3 \pm 8.24 | 51.05\pm 8.97 |
| | With HyNoL | 29.47 \pm12.51 | **40.21 \pm12.37** | **67.8 \pm 14.44** | **51.08** \pm **8.44** |
| ELU | Standard | 28.2 \pm10.38 | **34.38 \pm15.85** | 27.5 \pm 10.2 | 48.66\pm 9.64 |
| | With HyNoL | **31.45 \pm11.34** | 34.01 \pm 15.48 | **71.5 \pm 6.75** | **50.90** \pm **8.42** |
| PreLU | Standard | 27.96 \pm13.99 | **43.72 \pm12.75** | **65.73 \pm 5.01** | 50.06 \pm 9.73 |
| | With HyNoL | **29.51 \pm11.89** | 42.93 \pm12.60 | 65.54 \pm 8.92 | **50.95** \pm **8.06** |
| Leaky ReLU | Standard | 29.07 \pm9.67 | 10.29 \pm1.63 | 63.81\pm 7.0 | **51.38**\pm **8.16** |
| | With HyNoL | **30.53 \pm12.04** | **29.53 \pm 15.33** | **71.29 \pm 6.5** | 50.25\pm 4.57 |
| Pm = plus and minus | | | | | |

For instance, on CIFAR-100 with the ResNet-56 architecture, the HyNoL of the present disclosure achieves a significant 21.35% improvement in accuracy compared to GELU. Similarly, for Tiny ImageNet on ResNet-56, the HyNoL of the present disclosure exhibits a notable 27.95% accuracy boost. In even more complex architectures like Vision Transformers (ViT) on Tiny ImageNet, the HyNoL of the present disclosure demonstrates a 7.11 % improvement over Mish. These results underscore the robustness and superior performance of the HyNoL of the present disclosure in demanding scenarios.

On CIFAR-10, the HyNoL of the present disclosure achieves higher accuracy in most models, outperforming 71.43% time while maintaining comparable results for the remaining. Even with lightweight architecture such as MobileNet, the HyNoL of the present disclosure performs competitively, illustrating its generalizability across both shallow and deep networks.

In high-capacity models such as ViT, which face performance challenges on large datasets, the HyNoL of the present disclosure demonstrates consistent improvements. On Tiny ImageNet, it improves accuracy by 7.11% over SELU and 2.24% over Mish, demonstrating its ability to mitigate performance degradation in complex networks. The encouraging performance of the HyNoL of the present disclosure is attributed to its hybrid design, which merges adaptive and fixed non-linearities. The adaptive elements of the HyNoL of the present disclosure adjust to task specific parameters, capturing complex relationships for task adaptation, thus enhancing generalization.

The impact of the HyNoL of the present disclosure activations on task-aware forgetting across various network architectures and datasets were demonstrated, emphasizing their generalization capability and effectiveness in addressing forgetting challenges. Tables 3A, 3B, and 3C show the forgetting comparison results with the standard activation on CIFAR-10, CIFAR-100 and Tiny ImageNet, respectively. As dataset complexity increases, task-aware forgetting becomes more pronounced, irrespective of the activation function used, as shown in tables 3A, 3B, and 3C. This underscores the inherent difficulty of retaining task-specific information in more challenging datasets. However, the HyNoL of the present disclosure demonstrates significant improvements across all datasets, reinforcing its robustness across varying levels of complexity.

**Table 3A**

| Techniques-CIFAR-10 | | ResNet | VGGNet |
|---|---|---|---|
| RELU | Standard | 41.4 | **29.2** |
| | With HyNoL | 40 | 29.4 |
| SELU | Standard | **9.5** | 44.9 |
| | With HyNoL | 44 | **40** |
| Mish | Standard | 40.9 | **28.5** |
| | With HyNoL | **40.4** | 30.4 |
| GELU | Standard | **43.2** | 29.9 |
| | With HyNoL | 44.3 | 30.2 |
| ELU | Standard | 43.7 | 30.6 |
| | With HyNoL | **40.9** | **29.7** |
| PreLU | Standard | **39.2** | **28.4** |
| | With HyNoL | 46.4 | 30.4 |
| Leaky ReLU | Standard | **40** | 30.2 |
| | With HyNoL | 42.4 | **29.6** |

**Table 3B**

| Techniques-CIFAR-100 | | ResNet | VGGNet | ViT |
|---|---|---|---|---|
| RELU | Standard | 40.2 | **46.3** | 15.7 |
| | With HyNoL | **38.5** | 51.4 | **14.8** |
| SELU | Standard | **16.9** | **29.3** | 17.2 |
| | With HyNoL | 40.3 | 31.2 | **16** |
| Mish | Standard | 40.7 | **45.6** | 16.3 |
| | With HyNoL | **40.7** | 49.7 | **15.2** |
| GELU | Standard | 40.2 | 49.6 | 16.5 |
| | With HyNoL | **38.7** | **48.6** | **15** |
| ELU | Standard | 45.6 | 50.9 | 16.8 |
| | With HyNoL | **38.4** | **48.1** | **15.7** |
| PreLU | Standard | **36.7** | 49.9 | 15.9 |
| | With HyNoL | 38.7 | **46.5** | **14.6** |
| Leaky ReLU | Standard | 38.5 | 50.8 | 15.8 |
| | With HyNoL | **37.2** | **49.2** | **15.4** |

**Table 3C**

| Techniques-Tiny ImageNet | | ResNet | VGGNet | ViT |
|---|---|---|---|---|
| RELU | Standards | 29.7 | 46.3 | 12.3 |
| | With HyNoL | **24** | **42.5** | **10.7** |
| SELU | Standards | 34.5 | **38.7** | 14.2 |
| | With HyNoL | **24.2** | 42 | **9.6** |
| Mish | Standards | 27.1 | 45.2 | 12.9 |
| | With HyNoL | **24.4** | **43.7** | **11.1** |
| GELU | Standards | **22.9** | 44.9 | **11** |
| | With HyNoL | 26.5 | **42.5** | 11.4 |
| ELU | Standards | 27.5 | 50.4 | 12.4 |
| | With HyNoL | **27.3** | **45.9** | **12.4** |
| PreLU | Standards | 24.4 | 43.8 | 11.3 |
| | With HyNoL | **24** | **40.5** | **10.7** |
| Leaky ReLU | Standards | 26.8 | 44.7 | 12.5 |
| | With HyNoL | **24.5** | **38.6** | **12.2** |

For instance, in Tiny ImageNet, networks with the HyNoL of the present disclosure exhibits consistently lower forgetting scores compared to their counterparts. Specifically, the HyNoL of the present disclosure achieves up to 19.1% reduction in forgetting on ResNet and 13.8% on ViT, compared to baseline activations. On CIFAR-10 with the VGG-like architecture, the HyNoL of the present disclosure achieves a task-aware forgetting score of 29.4%, closely matching the 29.2% of the standard ReLU, highlighting its competitive performance even in lightweight architectures. These results indicate the superior generalizability of the HyNoL of the present disclosure in mitigating task-aware forgetting.

Tables 3A, 3B, and 3C further demonstrate that the HyNoL of the present disclosure consistently outperforms traditional methods across diverse network architectures, including complex models like Vision Transformers (ViT). ViT, known for its deep and intricate structure, shows a marked reduction in task-aware forgetting, achieving a 13.3% reduction compared to contemporary activation functions. This underscores the ability of the present disclosure to promote task retention in deep, high-capacity models, which are typically more prone to forgetting.

The experimental results suggest that the HyNoL of the present disclosure enhances generalization by ensuring superior knowledge retention, even in models and datasets with greater complexity. Improvement in the hybrid approach, the HyNoL of the present disclosure integrates adaptive and fixed non-linearities, enabling the model to dynamically adjust to the challenges posed by deep neural network architecture and complex datasets. This makes the HyNoL of the present disclosure a robust and generalized solution for mitigating task-aware forgetting in continual learning frameworks.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of enhancing plasticity and stability in neural networks in continual learning. The experimental results proved that the HyNol of the present disclosure significantly enhances plasticity upto 20% approximately over a strong baseline, demonstrating its effectiveness.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), comprising:
receiving, via one or more input/output (I/O) interfaces, (i) a neural network architecture of a neural network model (N) for which a plasticity is to be enhanced while maintaining a stability, (ii) a training data (*Dₜᵣₐᵢₙ*)*,* and (iii) a validation data (*Dᵥₐₗ*)*,* wherein the neural network architecture *(N)* comprises L number of network layers, one or more initial weights (W), and one or more initial biases (b), and wherein the training data (*Dₜᵣₐᵢₙ*) and the validation data (*Dᵥₐₗ*) are associated with each task of a plurality of tasks (202);
dividing, via one or more hardware processors, the neural network architecture into a first block and a second block, based on the L number of network layers, wherein the first block comprises the neural network architecture with a predefined number of initial network layers out of the L number of network layers, and the second block comprises the neural network architecture with remaining network layers out of the L number of network layers (204);
forming, via the one or more hardware processors, a first network configuration model and a second network configuration model using the first block and the second block, using a hybrid activation function, wherein the hybrid activation function comprises of a fixed activation function, and an adaptive activation function, and wherein the first network configuration model comprises the first block with the fixed activation function and the second block with the adaptive activation function, and the second network configuration model comprises the first block with the adaptive activation function and the second block with the fixed activation function (206);
training, via the one or more hardware processors, the first network configuration model and the second network configuration model with the training data (*Dₜᵣₐᵢₙ*)*,* to obtain a first trained network configuration model and a second trained network configuration model, respectively (208);
selecting, via the one or more hardware processors, an optimal network configuration model out of the first network configuration model and the second network configuration model, based on a validation accuracy of the first trained network configuration model and the second trained network configuration model, wherein the validation accuracy is calculated using the validation data (*Dᵥₐₗ*) (210); and
recommending, via the one or more hardware processors, the optimal network configuration model for training the neural network model (N) with the training data (*Dₜᵣₐᵢₙ*)*,* and the validation data (*Dᵥₐₗ*)*,* to obtain a trained neural network model, wherein the trained neural network model achieves an enhanced plasticity while maintaining the stability (212).

2. The processor-implemented method (200) as claimed in claim 1, wherein the predefined number of initial network layers in the first block is decided based on a type and a depth of the neural network model (*N*).

3. The processor-implemented method (200) as claimed in claim 1, wherein training the first network configuration model with the training data (*Dₜᵣₐᵢₙ*)*,* to obtain the first trained network configuration model, comprises:
initializing the one or more initial weights (*W*), the one or more initial biases (*b*), and one or more task specific parameters (*θ_{T}*) associated with the first network configuration model, wherein the one or more task specific parameters (*θ_{T}*) are associated with each task of the plurality of tasks (208a1);
forward passing to the first network configuration model, each mini-batch at a time, of a plurality of mini-batches formed from the training data (*Dₜᵣₐᵢₙ*) at each iteration of one or more iterations, to calculate an output of an activation function at each network layer of the **L** number of network layers present in the first network configuration model, wherein the fixed activation function is applied on each network layer of the **L** number of network layers present in the first block and the adaptive activation function is applied on each network layer of the **L** number of network layers present in the second block (208a2);
determining a value of the loss function of the first network configuration model, based on the output of an activation function at each network layer of the **L** number of network layers present in the first network configuration model (208a3); and
updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the first trained network configuration model (208a4).

4. The processor-implemented method (200) as claimed in claim 1, wherein training the second network configuration model with the training data (*Dₜᵣₐᵢₙ*)*,* to obtain the second trained network configuration model, comprises:
initializing the one or more initial weights (*W*), the one or more initial biases (*b*), and one or more task specific parameters (*θ_{T}*) associated with the second network configuration model, wherein the one or more task specific parameters (*θ_{T}*) are associated with each task of the plurality of tasks (208b1);
forward passing to the second network configuration model, each mini-batch at a time, of a plurality of mini-batches formed from the training data (*Dₜᵣₐᵢₙ*) at each iteration of one or more iterations, to calculate an output of an activation function at each network layer of the *L* number of network layers present in the second network configuration model, wherein the adaptive activation function is applied on each network layer of the *L* number of network layers present in the first block and the fixed activation function is applied on each network layer of the *L* number of network layers present in the second block (208b2);
determining a value of the loss function of the second network configuration model, based on the output of an activation function at each network layer of the *L* number of network layers present in the second network configuration model (208b3); and
updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the second trained network configuration model (208b4).

5. The processor-implemented method (200) as claimed in claim 1, wherein the fixed activation function at each network layer of the *L* number of network layers is mathematically expressed as: ${h}^{l} = {σ}_{f} \left({W}^{l}{h}^{l - 1}+{b}^{l}\right)$ wherein *σ_{f}* is a fixed basis function, *W^{l}* is a weight matrix at a network layer *l, h*^{*l-*1} is the fixed activation function from previous network layer, and *b^{l}* is a bias vector at a network layer *l.*

6. The processor-implemented method (200) as claimed in claim 1, wherein the adaptive activation function at each network layer of the L number of network layers is mathematically expressed as: ${h}_{T}^{l} = \left(1+{θ}_{T}\right) {σ}_{a} \left({W}^{l}{h}_{T}^{l - 1}+{b}^{l}\right)$ wherein *σₐ* is an adaptive basis function, *W^{l}* is a weight matrix at a network layer *l,* ${h}_{T}^{l - 1}$ is the adaptive activation function from previous network layer, *b^{l}* is a bias vector at a network layer *l,* and *θ_{T}* represents the one or more task specific parameters.

7. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive (i) a neural network architecture of a neural network model (*N*) for which a plasticity is to be enhanced while maintaining a stability, (ii) a training data (*Dₜᵣₐᵢₙ*)*,* and (iii) a validation data (*Dᵥₐₗ*)*,* wherein the neural network architecture (*N*) comprises *L* number of network layers, one or more initial weights (*W*), and one or more initial biases (*b*), and wherein the training data (*Dₜᵣₐᵢₙ*) and the validation data (*Dᵥₐₗ*) are associated with each task of a plurality of tasks;
divide the neural network architecture into a first block and a second block, based on the *L* number of network layers, wherein the first block comprises the neural network architecture with a predefined number of initial network layers out of the *L* number of network layers, and the second block comprises the neural network architecture with remaining network layers out of the *L* number of network layers;
form a first network configuration model and a second network configuration model using the first block and the second block, using a hybrid activation function, wherein the hybrid activation function comprises of a fixed activation function, and an adaptive activation function, and wherein the first network configuration model comprises the first block with the fixed activation function and the second block with the adaptive activation function, and the second network configuration model comprises the first block with the adaptive activation function and the second block with the fixed activation function;
train the first network configuration model and the second network configuration model with the training data (*Dₜᵣₐᵢₙ*)*,* to obtain a first trained network configuration model and a second trained network configuration model, respectively;
select an optimal network configuration model out of the first network configuration model and the second network configuration model, based on a validation accuracy of the first trained network configuration model and the second trained network configuration model, wherein the validation accuracy is calculated using the validation data (*Dᵥₐₗ*); and
recommend the optimal network configuration model for training the neural network model (*N*) with the training data (*Dₜᵣₐᵢₙ*)*,* and the validation data (*Dᵥₐₗ*)*,* to obtain a trained neural network model, wherein the trained neural network model achieves an enhanced plasticity while maintaining the stability.

8. The system (100) as claimed in claim 7, wherein the predefined number of initial network layers in the first block is decided based on a type and a depth of the neural network model (*N*).

9. The system (100) as claimed in claim 7, wherein the one or more hardware processors (104) are configured to train the first network configuration model with the training data (*Dₜᵣₐᵢₙ*)*,* to obtain the first trained network configuration model, by:
initializing the one or more initial weights (*W*), the one or more initial biases (*b*), and one or more task specific parameters (*θ_{T}*) associated with the first network configuration model, wherein the one or more task specific parameters (*θ_{T}*) are associated with each task of the plurality of tasks;
forward passing to the first network configuration model, each mini-batch at a time, of a plurality of mini-batches formed from the training data (*Dₜᵣₐᵢₙ*) at each iteration of one or more iterations, to calculate an output of an activation function at each network layer of the *L* number of network layers present in the first network configuration model, wherein the fixed activation function is applied on each network layer of the *L* number of network layers present in the first block and the adaptive activation function is applied on each network layer of the *L* number of network layers present in the second block;
determining a value of the loss function of the first network configuration model, based on the output of an activation function at each network layer of the *L* number of network layers present in the first network configuration model; and
updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the first trained network configuration model.

10. The system (100) as claimed in claim 7, wherein the one or more hardware processors (104) are configured to train the second network configuration model with the training data (*Dₜᵣₐᵢₙ*)*,* to obtain the second trained network configuration model, by:
initializing the one or more initial weights (*W*), the one or more initial biases (*b*), and one or more task specific parameters (*θ_{T}*) associated with the second network configuration model, wherein the one or more task specific parameters (*θ_{T}*) are associated with each task of the plurality of tasks;
forward passing to the second network configuration model, each mini-batch at a time, of a plurality of mini-batches formed from the training data (*Dₜᵣₐᵢₙ*) at each iteration of one or more iterations, to calculate an output of an activation function at each network layer of the *L* number of network layers present in the second network configuration model, wherein the adaptive activation function is applied on each network layer of the *L* number of network layers present in the first block and the fixed activation function is applied on each network layer of the *L* number of network layers present in the second block;
determining a value of the loss function of the second network configuration model, based on the output of an activation function at each network layer of the *L* number of network layers present in the second network configuration model; and
updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the second trained network configuration model.

11. The system (100) as claimed in claim 7, wherein the fixed activation function at each network layer of the *L* number of network layers is mathematically expressed as: ${h}^{l} = {σ}_{f} \left({W}^{l}{h}^{l - 1}+{b}^{l}\right)$ wherein *σ_{f}* is a fixed basis function, *W^{l}* is a weight matrix at a network layer *l*, *h*^{*l-*1} is the fixed activation function from previous network layer, and *b^{l}* is a bias vector at a network layer *l*.

12. The system (100) as claimed in claim 7, wherein the adaptive activation function at each network layer of the *L* number of network layers is mathematically expressed as: ${h}_{T}^{l} = \left(1+{θ}_{T}\right) {σ}_{a} \left({W}^{l}{h}_{T}^{l - 1}+{b}^{l}\right)$ wherein *σₐ* is an adaptive basis function, *W^{l}* is a weight matrix at a network layer *l,* ${h}_{T}^{l - 1}$ is the adaptive activation function from previous network layer, *b^{l}* is a bias vector at a network layer *l,* and *θ_{T}* represents the one or more task specific parameters.

13. One or more non-transitory machine-readable information storage mediums comprising one or more instructions which when executed by one or more hardware processors cause:
receiving (i) a neural network architecture of a neural network model *(N)* for which a plasticity is to be enhanced while maintaining a stability, (ii) a training data (*Dₜᵣₐᵢₙ*)*,* and (iii) a validation data (*Dᵥₐₗ*)*,* wherein the neural network architecture (*N*) comprises *L* number of network layers, one or more initial weights (*W*), and one or more initial biases (*b*), and wherein the training data (*Dₜᵣₐᵢₙ*) and the validation data (*Dᵥₐₗ*) are associated with each task of a plurality of tasks;
dividing the neural network architecture into a first block and a second block, based on the *L* number of network layers, wherein the first block comprises the neural network architecture with a predefined number of initial network layers out of the *L* number of network layers, and the second block comprises the neural network architecture with remaining network layers out of the *L* number of network layers;
forming a first network configuration model and a second network configuration model using the first block and the second block, using a hybrid activation function, wherein the hybrid activation function comprises of a fixed activation function, and an adaptive activation function, and wherein the first network configuration model comprises the first block with the fixed activation function and the second block with the adaptive activation function, and the second network configuration model comprises the first block with the adaptive activation function and the second block with the fixed activation function;
training the first network configuration model and the second network configuration model with the training data (*Dₜᵣₐᵢₙ*)*,* to obtain a first trained network configuration model and a second trained network configuration model, respectively;
selecting an optimal network configuration model out of the first network configuration model and the second network configuration model, based on a validation accuracy of the first trained network configuration model and the second trained network configuration model, wherein the validation accuracy is calculated using the validation data (*Dᵥₐₗ*); and
recommending the optimal network configuration model for training the neural network model (*N*) with the training data (*Dₜᵣₐᵢₙ*)*,* and the validation data (*Dᵥₐₗ*), to obtain a trained neural network model, wherein the trained neural network model achieves an enhanced plasticity while maintaining the stability.

14. The one or more non-transitory machine-readable information storage mediums as claimed in claim 13, wherein the predefined number of initial network layers in the first block is decided based on a type and a depth of the neural network model (*N*).

15. The one or more non-transitory machine-readable information storage mediums as claimed in claim 13, wherein the one or more hardware processors (104) are configured to train the first network configuration model with the training data (*Dₜᵣₐᵢₙ*)*,* to obtain the first trained network configuration model, by:
initializing the one or more initial weights (*W*), the one or more initial biases (*b*), and one or more task specific parameters (*θ_{T}*) associated with the first network configuration model, wherein the one or more task specific parameters (*θ_{T}*) are associated with each task of the plurality of tasks;
forward passing to the first network configuration model, each mini-batch at a time, of a plurality of mini-batches formed from the training data (*Dₜᵣₐᵢₙ*) at each iteration of one or more iterations, to calculate an output of an activation function at each network layer of the *L* number of network layers present in the first network configuration model, wherein the fixed activation function is applied on each network layer of the *L* number of network layers present in the first block and the adaptive activation function is applied on each network layer of the *L* number of network layers present in the second block;
determining a value of the loss function of the first network configuration model, based on the output of an activation function at each network layer of the *L* number of network layers present in the first network configuration model; and
updating the one or more initial weights (*W*), and the one or more initial biases (*b*) of the first network configuration model, based on the value of the loss function to obtain one or more successive weights (*W*), and one or more successive biases (*b*) and proceeding with a next iteration using the one or more successive weights (*W*), and the one or more successive biases (*b*) until the one or more iterations are completed to obtain the first trained network configuration model.
